# EUROPÄISCHE PATENTSCHRIFT

(11) **EP 1 101 991 B1**
(45) Veröffentlichungstag und Bekanntmachung des Hinweises auf die Patenterteilung: **31.05.2006**
(21) Anmeldenummer: 00811060.3
(22) Anmeldetag: 10.11.2000
(51) Int. Cl.: F16L 5/02, F16L 5/10

(54) **Verfahren und Dichtungselement zur Spaltabdichtung**
Method and sealing element for the sealing of gaps
Procédé et élément d'étanchéité pour l'étanchéification de fentes

(30) Priorität: 19.11.1999 DE 19955763
(43) Veröffentlichungstag der Anmeldung: 23.05.2001
(73) Patentinhaber: HILTI Aktiengesellschaft, 9494 Schaan (LI)
(72) Erfinder: Kögler, Markus, 86807 Buchloe (DE); Huber, Silvia, 86356 Neusäss (DE); Heimpel, Franz, 86444 Affing (DE); Vogel, Peter, 86836 Untermeitingen (DE)
(74) Vertreter: Wildi, Roland

(56) Entgegenhaltungen:
- DE-A- 19 917 127
- FR-A- 2 671 916
- GB-A- 2 088 653

## Beschreibung

Die Erfindung bezieht sich auf ein Verfahren gemäß dem Oberbegriff des Patentanspruchs 1 zum Abdichten eines Spalts zwischen einer in einem Bauelement vorhandenen Durchführung und wenigstens einem die Durchführung durchragenden Gegenstand durch Anordnen wenigstens eines Abdichtelements im Spalt, das aus einem Material auf Polymerbasis besteht und gleichmäßig verteilte temperaturaktivierbare Blähmittel enthält, und dem nach Einbringen in den Spalt Wärme von außen zugeführt wird. Ferner bezieht sich die Erfindung auf ein Abdichtelement zur Spaltabdichtung, bestehend aus einem Material auf Polymerbasis mit gleichmäßig verteiltem temperaturaktivierbaren Blähmittel. Ein derartiges Verfahren sowie ein derartiges Abdichtelement sind bereits aus der DE 199 17 127 A1 bekannt.

Der Erfindung liegt die Aufgabe zugrunde, ein Verfahren und ein abdichtelement der eingangs genannten Art so weiterzubilden, daß eine schnellere und einfachere Abdichtung einer Durchführung auch im Hinblick auf unterschiedliche Durchmesser von Durchführung und sie durchragenden Gegenstand möglich ist.

Die verfahrensseitige Lösung der gestellten Aufgabe ist im kennzeichnenden Teil des Patentanspruchs 1 angegeben. Dagegen findet sich die vorrichtungsseitige Lösung der gestellten Aufgabe im kennzeichnenden Teil des Patentanspruchs 3. Vorteilhafte Ausgestaltungen der Erfindung sind den jeweils nachgeordneten Unteransprüchen zu entnehmen.

Ein erfindungsgemäßes Verfahren zum Abdichten eines Spalts zwischen einer in einem Bauelement vorhandenen Durchführung und wenigstens einem die Durchführung durchragenden Gegenstand durch Anordnen wenigstens eines Abdichtelements im Spalt, das aus einem Material auf Polymerbasis besteht und gleichmäßig verteilte temperaturaktivierbare Blähmittel enthält, und dem nach Einbringen in den Spalt Wärme von außen zugeführt wird, zeichnet sich dadurch aus, daß eine Vielzahl von stabförmigen Abdichtelementen in den Spalt hineingesteckt wird.

Feste, stabförmig ausgebildete Abdichtelemente aus expandierbarem Material werden in den Spalt zwischen einer in einer Wand vorhandenen Durchführung und wenigstens einem sie durchragenden Gegenstand eingeführt und dort gestapelt. Je nach Größe des Spalts können dabei mehr oder weniger Abdichtelemente zum Einsatz kommen. Nachdem der Spalt möglichst vollständig mit Abdichtelementen ausgefüllt worden ist, werden diese erhitzt. Danach schmelzen die Abdichtelemente, expandieren und werden dann wieder fest. Dadurch werden auch verbleibende Bereiche der Durchführung dicht und dauerhaft verschlossen. Das Material der Abdichtelemente ist resistent gegen die meisten Flüssigkeiten und insbesondere Wasser, so daß der Verschluß der Durchführung auch flüssigkeitsdicht ist.

Das nach der Erfindung zum Einsatz kommende Abdichtelement besteht aus Hotmelt- (bzw. Warmmelt-) Polymeren, zum Beispiel auf Expoxi- oder PUR-Basis. Es enthält wenigstens ein temperaturaktivierbares Blähmittel. Als temperaturaktivierbare Blähmittel können alle Substanzen verwendet werden, die bei Wärme Gase abspalten, zum Beispiel Stickstoff. So können als temperaturaktivierbare Blähmittel feste Substanzen zum Einsatz kommen, die sich bei Erreichen einer vorbestimmten Temperatur unter Abspaltung von Gasen zersetzen. Sie müssen gleichmäßig verteilt im Abdichtelement vorhanden sein. Bei diesen Blähmitteln kann es sich um organische Verbindungen oder Stickstoff enthaltende Verbindungen handeln, z.B. Azo-Verbindungen, Hydrazine, usw.

Als temperaturaktivierbare Blähmittel könnten aber auch mikroverkapselte Flüssigtreibmittel zum Einsatz kommen. Hierbei handelt es sich z.B. um Pentan, i-Butan, etc.

Nach einer vorteilhaften Weiterbildung der Erfindung enthält das Abdichtelement auch einen temperaturaktivierbaren bzw. blockierten Härter, der dafür sorgt, daß die Erstarrung im expandierten Zustand irreversibel ist. Bei diesem temperaturaktivierbaren bzw. blockierten Härten kann es sich zum Beispiel um einen chemisch blockierten Härter, etwa um verkappte Amine, oder um einen mechanisch blockierten Härter, der z.B. mikroverkapselt ist, handeln.

Ferner ist es für die Aktivierung des Abdichtelements erforderlich, dafür zu sorgen, daß Wärme erzeugt und über das ganze Abdichtelement verteilt wird. Zur Verteilung der Wärme durch das Abdichtelement können z.B. Metallfäden in das Material mit eingearbeitet sein. Die Wärmezufuhr kann dann von außen erfolgen, etwa durch Zuführung von Heißluft unter Verwendung des Föns, durch Stromfluß durch die metallischen Fäden hindurch, die das gesamte Abdichtelement in Längsrichtung durchsetzen, usw.. Nach Zufuhr der Wärme von außen verteilt sich die Wärme über die metallischen Fäden gleichmäßig durch das Abdichtelement hindurch und bringt dieses zum Schmelzen. In der Schmelze werden dann die temperaturaktivierbaren Blähmittel aktiviert. welche zur Volumenvergrößerung des Abdichtelements führen. Im Falle eines vorhandenen Härters wird auch dieser bei Erreichen einer bestimmten Temperatur aktiviert. Nach Abkühlung erstarrt das schaumförmige Material des Abdichtelements, und die Durchführung ist fest und flüssigkeitsdicht verschlossen.

Nach einer noch weiteren Ausgestaltung der Erfindung können im Abdichtelement auch Wärmezellen enthalten sein. Diese Wärmezellen können Chemikalien enthalten, die bei Aktivierung exotherm reagieren und Wärme abgeben. Auch diese Wärme kann sich dann über die metallischen Fäden weiter im Abdichtelement verteilen. Idealerweise wird bei der Reaktion des Abdichtelement-Polymers mit dem temperaturaktivierbaren bzw. blockierten Härter so viel Exotherme frei, daß sie für eine eigenständige Weiterreaktion in Form einer Kettenreaktion ausreicht. Die Aktivierung der Wärmezellen könnte wiederum durch geringe und kurzzeitige Zufuhr von Wärme von außen erfolgen.

Zur einfacheren Handhabung sind die stabförmigen Abdichtelemente bzw. Hotmelt-Elemente gurtförmig miteinander verbunden, und zwar über ihre jeweiligen Längskanten. Sie lassen sich dann um strangförmige Gegenstände herumlegen oder herumwickeln, je nach Größe des Spalts zwischen Gegenstand und Wanddurchführung, so daß eine relativ einfache Positionierung der Abdichtelemente im Spalt möglich ist.

Ein Ausführungsbeispiel der Erfindung wird nachfolgend unter Bezugnahme auf die Zeichnung näher beschrieben. Es zeigen:
**Figur 1** ein durch feste Abdichtelemente ausgefüllter Spalt zwischen einer Wanddurchführung und zwei die Durchführung durchragenden Rohren;
**Figur 2** die Erhitzung der im Spalt befindlichen Abdichtelemente durch Zufuhr von Heißluft; und
**Figur 3** einen Endzustand gemäß Figur 2, bei dem die Abdichtelemente geschmolzen sind und den Spalt vollständig abdichten.

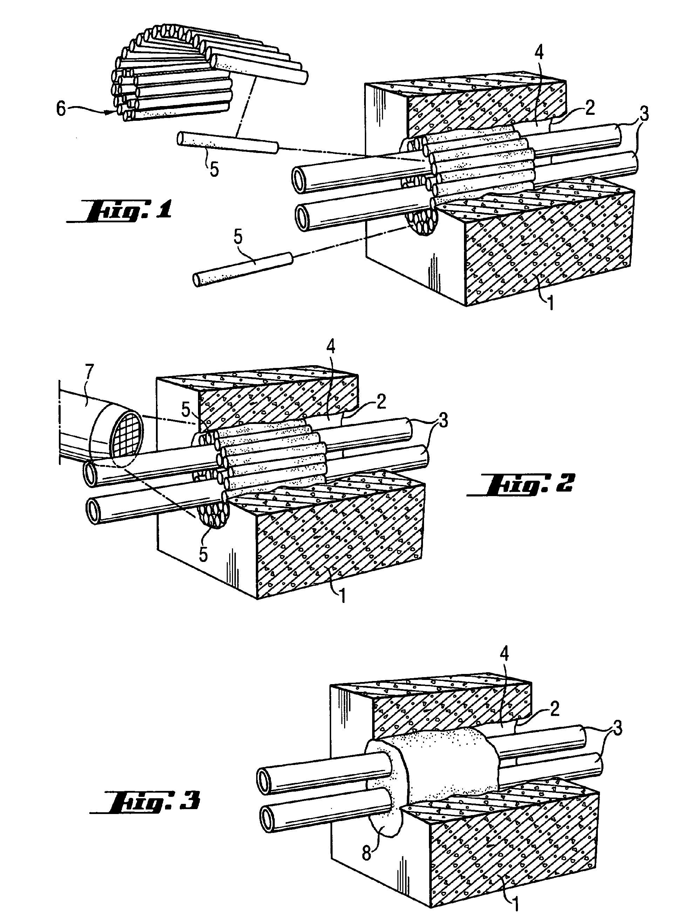

Entsprechend der Figur 1 befindet sich in einem Bauelement 1, das zum Beispiel die Wand eines Gebäudes sein kann, eine Durchführung 2. Durch die Durchführung 2 laufen zwei strangförmige Elemente 3 hindurch, in diesem Fall zwei Rohre. Zwischen den Rohren 3 und der Umfangswand der Durchführung 2 ist ein Spalt 4 vorhanden.

Zur Abdichtung des Spalts 4 werden zunächst von einer Wandseite aus stabförmige Abdichtelemente 5 in Längsrichtung in den Spalt 4 hineingeschoben. Diese stabförmigen Abdichtelemente 5 können von einem Gurt 6 abgenommen werden, der aus mehreren Abdichtelementen 5 besteht, die über ihre Längsseiten miteinander in Verbindung stehen.

Nachdem auf diese Weise der Spalt 4 mit festen Abdichtelementen 5 ausgefüllt worden ist, erfolgt eine Zufuhr von Wärme von außen. Dies ist in Figur 2 gezeigt. Die Abdichtelemente 5 werden durch einen Warmluftstrom stirnseitig erhitzt, der von einem Fön 7 erzeugt wird. Die Wärme wird über in den jeweiligen Abdichtelementen 5 vorhandene metallische Fäden gleichmäßig in den Abdichtelementen verteilt, so daß eine Aktivierung des darin enthaltenen Blähmittels erfolgen kann. Ggf. sind im Abdichtelement auch Wärmezellen zur weiteren Erzeugung von Wärme durch exotherme Reaktion enthalten.

Die Abdichtelemente 5 im Spalt 4, die auf diese Weise aktiviert worden sind, blähen sich somit auf und dichten dabei den Spalt 4 vollständig und insbesondere auch flüssigkeitsdicht ab. Es bildet sich ein Stopfen 8 aus einer einheitlichen geschmolzenen und erstarrten Masse aus Abdicht-Material, das die Rohre 3 dichtend umgibt und mit diesen sowie mit der Umfangswand der Durchführung 2 insbesondere auch verklebt, was zu einem festen Sitz des Stopfens 8 in der Durchführung 2 führt.

## Patentansprüche

1. Verfahren zum Abdichten eines Spalts (4) zwischen einer in einem Bauelement (1) vorhandenen Durchführung (2) und wenigstens einem die Durchführung (2) durchragenden Gegenstand (3) durch Anordnen wenigstens eines Abdichtelements (5) im Spalt (4), das aus einem Material auf Polymerbasis besteht und gleichmäßig verteilte temperaturaktivierbare Blähmittel enthält, und dem nach Einbringen in den Spalt (4) Wärme von außen zugeführt wird, **dadurch gekennzeichnet, daß** eine Vielzahl von stabförmigen Abdichtelementen (5) in den Spalt (4) hineingesteckt wird.

2. Verfahren nach Anspruch 1, **dadurch gekennzeichnet, daß** Wärme von außen in Form von Heißluft zugeführt wird.

3. Abdichtelement (5) zur Spaltabdichtung, bestehend aus einem Material aüf Polymerbasis mit gleichmäßig verteiltem temperaturaktivierbaren Blähmittel, **dadurch gekennzeichnet, daß** es stabförmig ausgebildet ist.

4. Abdichtelement nach Anspruch 3, **dadurch gekennzeichnet, daß** as mit anderen stabförmigen Abdichtelementen (5) zur Gurtbildung über seine Längskanten verbunden ist.

5. Abdichtelement nach Anspruch 3 oder 4, **dadurch gekennzeichnet, daß** es metallische Fäden zur Weiterleitung von Wärme enthält.

6. Abdichtelement nach einem der Ansprüche 3 bis 5, **dadurch gekennzeichnet, daß** es Wärmezellen zur Erzeugung von Wärme enthält.

7. Abdichtelement nach einem der Ansprüche 3 bis 6, **dadurch gekennzeichnet, daß** es einen Härter enthält.

## Claims

1. Method for sealing a gap (4) between a lead-through (2) in a construction element (1) and at least one object (3) projecting through the lead-through (2) by arranging within the gap (4) at least one sealing element (5) which consists of polymer-based material and contains uniformly distributed thermally activatable expanding agents, and to which heat is supplied from the exterior after insertion into the gap (4), **characterized in that** a plurality of rod-shaped sealing elements (5) are inserted into the gap (4).

2. Method according to Claim 1, **characterized in that** heat is supplied from the exterior in the form of hot air.

3. Sealing element (5) for gap sealing, consisting of polymer-based material with a uniformly distributed thermally activatable expanding agent, **characterized in that** it is rod-shaped.

4. Sealing element according to Claim 3, **characterized in that** it is joined by its longitudinal edges to other rod-shaped sealing elements (5) to form a belt.

5. Sealing element according to Claim 3 or Claim 4, **characterized in that** it contains metal filaments for transferring heat.

6. Sealing element according to any one of Claims 3 to 5, **characterized in that** it contains thermal cells for generating heat.

7. Sealing element according to any one of Claims 3 to 6, **characterized in that** it contains a hardener.

## Revendications

1. Procédé pour étanchéifier un interstice (4) entre un passage (2) existant dans un élément structurel (1) et au moins un objet (3) traversant le passage (2), en disposant dans l'interstice (4) au moins un élément d'étanchéité (5) qui est constitué d'une matière à base de polymère et contient des agents gonflants activables thermiquement répartis uniformément, et auquel de la chaleur est fournie après son introduction dans l'interstice (4), **caractérisé en ce qu'**une pluralité d'éléments d'étanchéité en forme de bâtonnets (5) sont insérés dans l'interstice (4).

2. Procédé selon la revendication 1, **caractérisé en ce que** la chaleur est fournie de l'extérieur sous forme d'air chaud.

3. Élément d'étanchéité (5) pour l'étanchéification d'interstices, constitué d'une matière à base de polymère avec des agents gonflants activables thermiquement répartis uniformément, **caractérisé en ce qu'**il est conformé en bâtonnet.

4. Élément d'étanchéité selon la revendication 3, **caractérisé en ce qu'**il est relié à d'autres éléments d'étanchéité en forme de bâtonnets (5) par ses bords longitudinaux pour former une bandé.

5. Élément d'étanchéité selon la revendication 3 ou 4, **caractérisé en ce qu'**il contient des fils métalliques pour propager la chaleur.

6. Élément d'étanchéité selon une des revendications 3 à 5, **caractérisé en ce qu'**il contient des cellules thermiques pour produire de la chaleur.

7. Élément d'étanchéité selon une des revendications 3 à 6, **caractérisé en ce qu'**il contient un durcisseur.
